# EUROPEAN PATENT APPLICATION

(11) **EP 2 653 294 A1**
(43) Date of publication of application: **23.10.2013**
(21) Application number: 12250099.4
(22) Date of filing: 21.04.2012
(51) Int. Cl.: B29C 70/22, B29C 70/46, B29C 70/48, B29C 70/54, B29C 70/86, B29C 70/88, B60B 5/00, B60B 27/02, B29L 31/30, B29K 307/04

(54) **Manufacturing method and structure of bicycle wheel hub**

(71) Applicant: Lin, Shu-Wei, Hsi Tun Taichung City (TW)
(72) Inventor: Lin, Shu-Wei, Hsi Tun Taichung City (TW)
(74) Representative: Brown, Michael Stanley

(57) **Abstract**

A manufacturing method of a bicycle wheel hub includes pre-weaving into a carbon fiber sleeve (10), stacking and telescoping carbon fiber sleeves, placing into left and right molds (30,31), placing reinforcing sheets (20), clamping upper and lower molds (32,33), vacuuming, injecting a resin, curing, mold opening and drilling. A structure of the wheel hub manufacturing by the method includes a carbon fiber body (40) and two reinforcing sheets (20). The carbon fiber body includes a tube portion (41) and two ear portions (42), which are integrally extended from two ends of the tube portion and have the larger outer diameters. The ear portions have spoke holes (43) arranged separately and in a ring shape. The reinforcing sheets are ring-shaped sheets and covered in the two ear portions, respectively, when the carbon fiber body is formed. The reinforcing sheets have through holes, which correspond to the spoke holes and have the same shape. The manufacturing method and structure has the enhanced production efficiency, stable quality, low cost and high structural strength.

## Description

### BACKGROUND OF THE INVENTION

### (1) FIELD OF THE INVENTION

The invention relates to the technological field of a bicycle component, and more particularly to a manufacturing method and a structure of a bicycle wheel hub with the enhanced production efficiency, the stable quality, the low cost and the high structural strength.

### (2) DESCRIPTION OF THE PRIOR ART

Most conventional wheel hubs are made of metal materials including an aluminum alloy or steel, and thus usually have the considerable weights. Recently, in response to the requirement of the lighted weight of the bicycle, a carbon fiber material is adopted to manufacture the wheel hub so that the wheel hub has the reduced weight and the sufficient structural strength. For example, the wheel hub of U. S. Patent No. 6,688,704 is manufactured mainly by adhering and winding a plurality of sheet-like carbon fiber cloths, and hot pressing the carbon fiber cloth layer in a mold to form the required shape.

However, the shapes of most current bicycle wheel hubs are the complicated cylindrical shapes, which have small middle diameters and the gradually outward expanding diameters to form tubular or bell shapes. Thus, various carbon fiber cloths with different shapes have to be manufactured in correspondence with the portions with different shapes, angles and diameters, and then transversal or longitudinal adhering and winding processes are performed according to the requirements. In this manner, various carbon fiber cloths with different shapes have to be manufactured in advance, and the manufacturing cost is significantly increased. In addition, the processes of transversally or longitudinally stacking and winding the carbon fiber cloths and applying a layer of adhesive, such as resin, to each carbon fiber cloth before winding are very complicated, time-consuming and labor-consuming, so that the production efficiency is poor. More particularly, the adhering and winding processes cannot be well performed by the non-professionals, and defects such as gas cavities tend to be produced during the adhering and winding processes. Thus, the product's quality is relatively unstable. More particularly, the junction between the carbon fiber cloths with different shapes forms more gaps, and the structural strength of the junction is also weaker than that of the other portion. In addition, the problems such as the gaps need to be improved using putty or oil in the rear end of the manufacturing process, and the manufacturing cost cannot be easily decreased.

In view of the associated problems, the present inventor has paid attention to the research and development and thus developed this invention.

### SUMMARY OF THE INVENTION

A main object of the invention is to provide a manufacturing method and a structure of a bicycle wheel hub with the enhanced production efficiency, the stable quality, the low cost and the high structural strength.

Specifically, the manufacturing method of the bicycle wheel hub of the invention includes: a pre-weaving step of weaving a plurality of carbon fiber yarns into a carbon fiber sleeve having two open ends, so that an aperture of the carbon fiber sleeve can be expanded and deformed according to requirements; a step of stacking and telescoping a plurality of the carbon fiber sleeves; a step of placing the stacked carbon fiber sleeves into a left mold and a right mold clamped together; a step of placing two ring-shaped reinforcing sheets from two openings of the stacked carbon fiber sleeves into the left and right molds, respectively, and folding two ends of the stacked carbon fiber sleeves back to inner sides of the two reinforcing sheets, respectively; a step of clamping an upper mold and a lower mold onto the left and right molds so that inner rods of the upper and lower molds extend into an inner side of the stacked carbon fiber sleeves and the stacked carbon fiber sleeves in a mold cavity are pressed into a predetermined shape; a step of vacuuming the mold cavity; a step of pressuring and injecting an adhesive into the mold cavity so that the adhesive sufficiently dips and penetrates into gaps of the stacked carbon fiber sleeves; a thermoforming step of heating the molds so that the stacked carbon fiber sleeves in the mold cavity and the adhesive are sufficiently combined together; a mold opening step of cooling the molds, opening the molds and taking out a wheel hub semi-facture having a tube portion and ear portions, which are integrally extended from two ends of the tube portion and have larger outer diameters, wherein the two reinforcing sheets are covered in the two ear portions, respectively; and a drilling step of drilling a plurality of spoke holes on the two ear portions so that the spoke holes pass through the internal reinforcing sheets.

Specifically, the structure of the bicycle wheel hub of the invention includes a carbon fiber body and two reinforcing sheets. The carbon fiber body is formed by molding a plurality of carbon fiber sleeves and an adhesive sufficiently dipping and penetrating into gaps of the plurality of carbon fiber sleeves. The carbon fiber body comprises a tube portion and two ear portions, which are integrally extended from two ends of the tube portion and have larger outer diameters. The ear portions have a plurality of spoke holes arranged separately and in a ring shape. The two reinforcing sheets are ring-shaped sheets and covered in the two ear portions, respectively, when the carbon fiber body is formed. The two reinforcing sheets have through holes, which correspond to the spoke holes and have the same shape.

In this invention, the manufacturing method is used to stack and telescope the carbon fiber sleeves, to place the stacked and telescoped carbon fiber sleeves into the molds and to inject the adhesive. Thus, the manufacturing processes of the wheel hub can be significantly simplified, the production efficiency can be enhanced and the cost can be decreased. The wheel hub is formed by stacking the carbon fiber sleeves so that the adhesive sufficiently dips and penetrates into gaps of the stacked carbon fiber sleeves. So, the invention is free from the conventional problems that the bubble tends to be produced using different shapes of carbon fiber cloths for splicing, that a lot of gaps are produced and that the structural strength is low. More particularly, the unity of the carbon fiber sleeve and the properties that the carbon fiber sleeve can be easily expanded and deformed and can be easily telescoped with each other further make the manufactured wheel hub have the good stability. In addition, the mutual telescoping of the carbon fiber sleeve does not need the professional technology, and the ordinary worker can complete the mutual telescoping. In addition, the carbon fiber sleeve formed by weaving the carbon fiber yarns can further increase the structural strength of the molded wheel hub.

Further aspects, objects, and desirable features of the invention will be better understood from the detailed description and drawings that follow in which various embodiments of the disclosed invention are illustrated by way of examples.

### BRIEF DESCRIPTION OF THE DRAWINGS

FIG. 1 is a block flow chart showing a manufacturing method of the invention.
FIG. 2 is a pictorial view showing a carbon fiber sleeve of the invention.
FIG. 3 is a schematic partial enlarged plane view showing the carbon fiber sleeve of the invention.
FIG. 4 is a schematic illustration showing an operation of stacking and telescoping a plurality of carbon fiber sleeves according to the invention.
FIG. 5 is a schematic enlarged cross-sectional view showing a plurality of stacked and telescoped carbon fiber sleeves according to the invention.
FIG. 6 is a schematic illustration showing operations of placing the stacked carbon fiber sleeves into left and right molds and placing reinforcing sheets into the stacked carbon fiber sleeves according to the invention.
FIG. 7 is a schematic illustration showing a step of clamping upper and lower molds according to the invention.
FIG. 8 is a three-dimensional schematic partial cross-sectional view showing a wheel hub taken out after the mold opening step according to the invention.
FIG. 9 is a three-dimensional schematic partial cross-sectional view showing the wheel hub structure of the invention.
FIG. 10 is a schematic cross-sectional view showing the wheel hub structure of the invention.

### DETAILED DESCRIPTION OF THE PREFERRED EMBODIMENTS

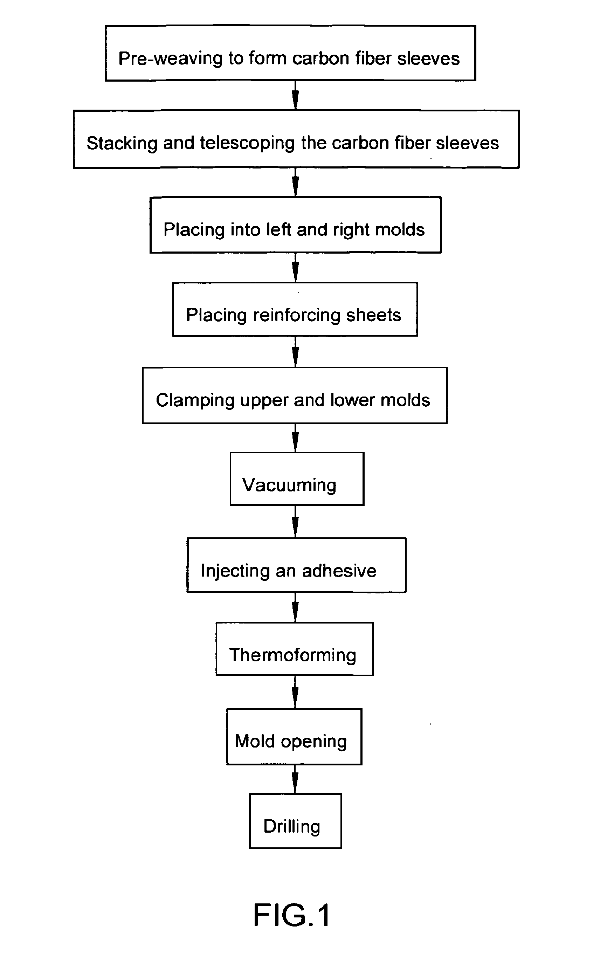

Referring to FIGS. 1 to 9, the manufacturing method of the bicycle wheel hub according to the invention includes the following steps.

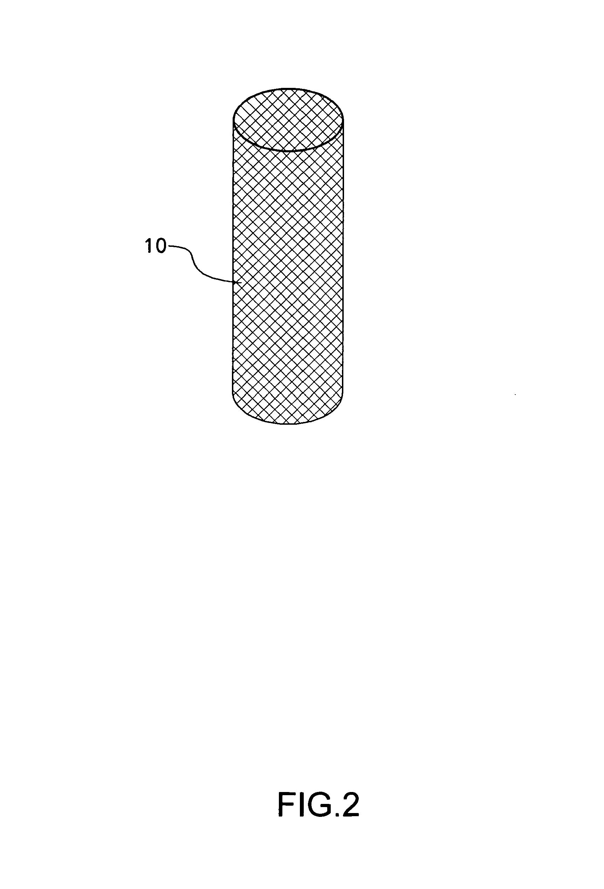

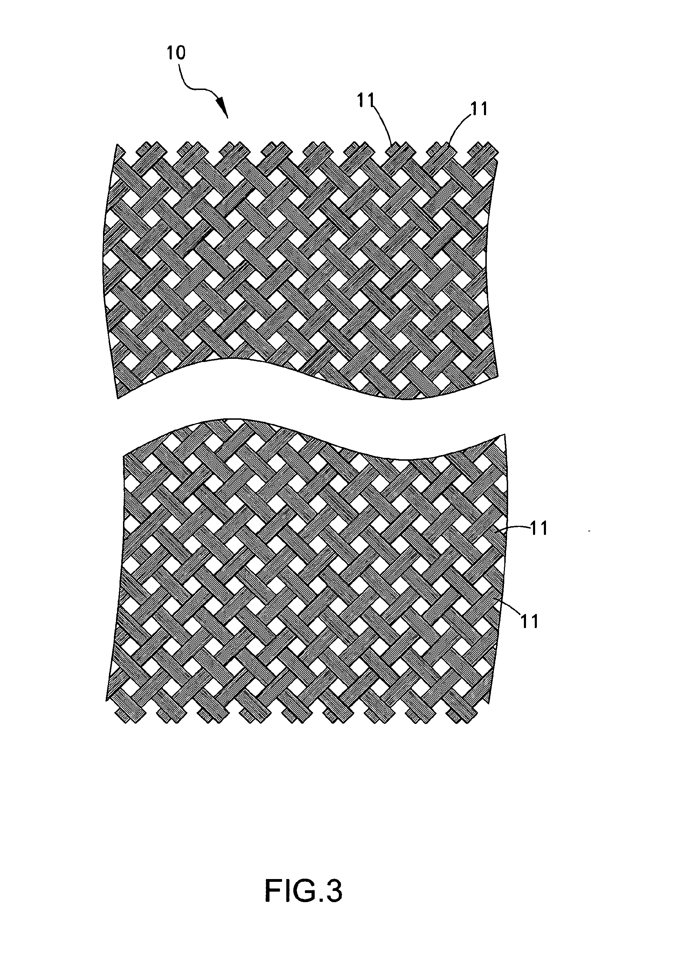

In a pre-weaving step, a plurality of carbon fiber yarns 11 are woven into a carbon fiber sleeve 10 having two open ends, so that an aperture of the carbon fiber sleeve 10 can be arbitrarily expanded and deformed according to the requirements. Each carbon fiber yarn 11 is formed by gathering a plurality of thin carbon fiber yarns, as shown in FIGS. 2 and 3. The cross section of the carbon fiber sleeve 10 in this step is in the form of closed loop. Thus, no seam is formed on the circumferential surface of each carbon fiber sleeve 10, and each carbon fiber yarn 11 is movable, so the aperture of the carbon fiber sleeve 10 can be easily and elastically changed. In addition, the pre-woven carbon fiber sleeves 10 may have the same aperture or different apertures.

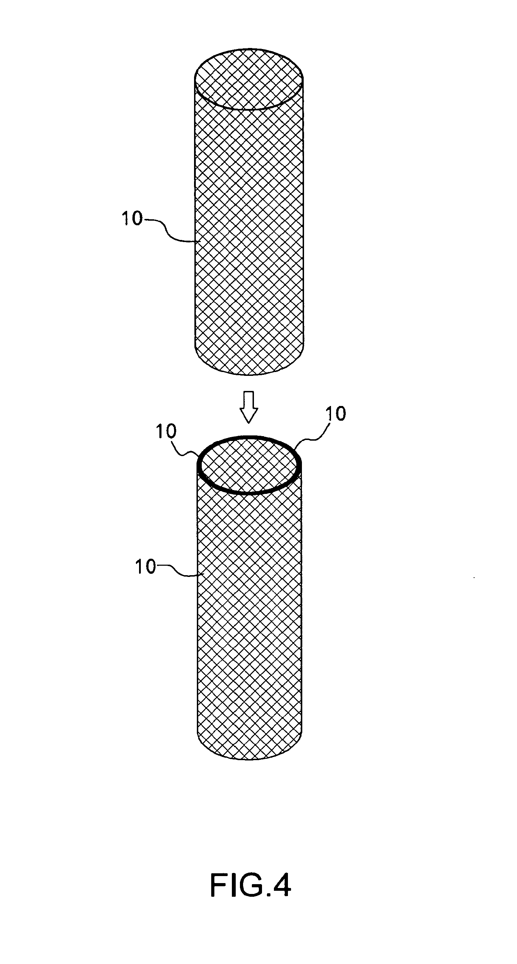

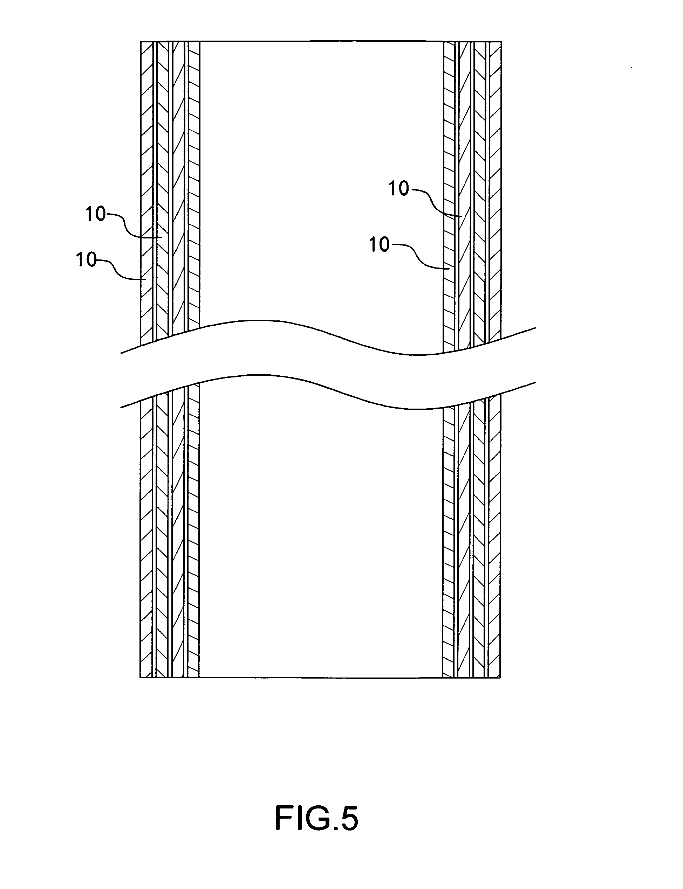

In a stacking and telescoping step, the carbon fiber sleeves 10 are radially stacked and telescoped together, as shown in FIGS. 4 and 5.

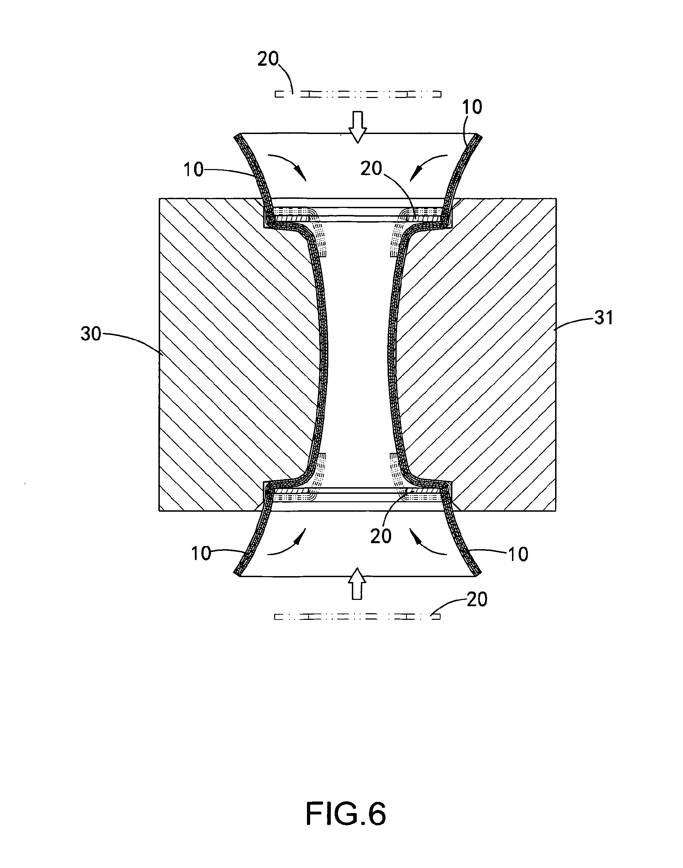

In a placing step, the stacked carbon fiber sleeves 10 are placed into a left mold 30 and a right mold 31 clamped together, as shown in FIG. 6.

In a reinforcing sheet placing step, two ring-shaped reinforcing sheets 20 are placed into the left and right molds 30 and 31 from two openings of the stacked carbon fiber sleeves 10, respectively, and two ends of the stacked carbon fiber sleeves 10 are folded and wound to the inner sides from the outer sides of the two reinforcing sheets 20, respectively, so that the two reinforcing sheets 20 are covered in the stacked carbon fiber sleeves 10. The reinforcing sheet 20 is a metal sheet with a high hardness, as shown in FIG. 6.

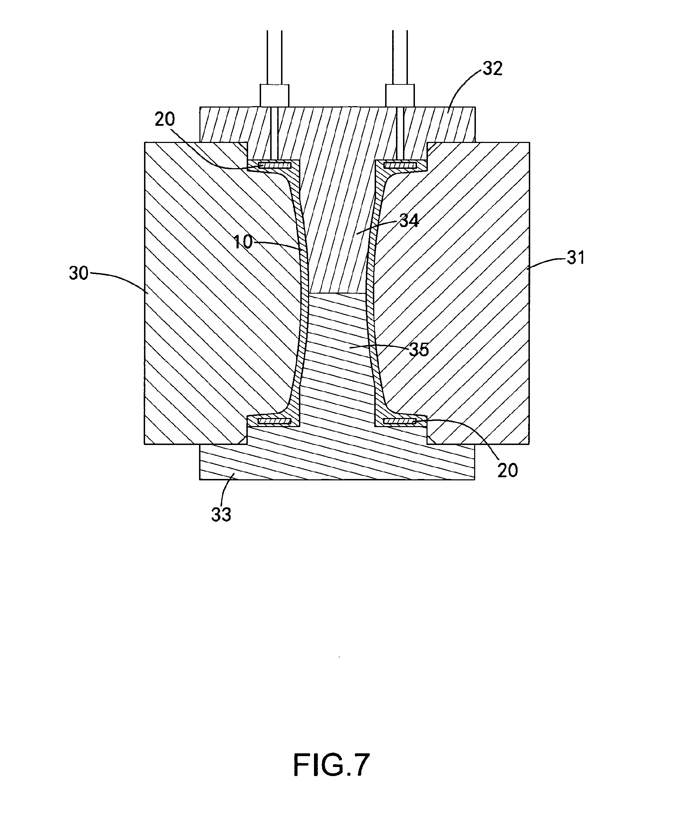

In a mold clamping step, an upper mold 32 and a lower mold 33 clamp onto the left and right molds 30 and 31. The upper and lower molds 32 and 33 have inner rods 34 and 35, respectively. An outer diameter of the end portion of the inner rod 34/35 is smaller than that of the root of the inner rod 34/35, and the circumferential surface of the inner rod 34/35 is a circular arc surface. Thus, the two inner rods 34 and 35 pass through the two reinforcing sheets 20, respectively, and extend into the inner side of the stacked carbon fiber sleeves 10, so that the stacked carbon fiber sleeves 10 in the mold cavity are pressed into a predetermined shape, as shown in FIG. 7.

In a vacuuming step, the mold cavity is vacuumed so that the stacked carbon fiber sleeves 10 become denser to facilitate the addition of the subsequent adhesive, as shown in FIG. 7.

In an adhesive injecting step, the adhesive is pressurized and injected into the mold cavity, so that the adhesive sufficiently dips and penetrates into gaps of the stacked carbon fiber sleeves 10, as shown in FIG. 7.

In a thermoforming step, all the molds are heated so that the stacked carbon fiber sleeves 10 in the mold cavity are sufficiently combined with the adhesive.

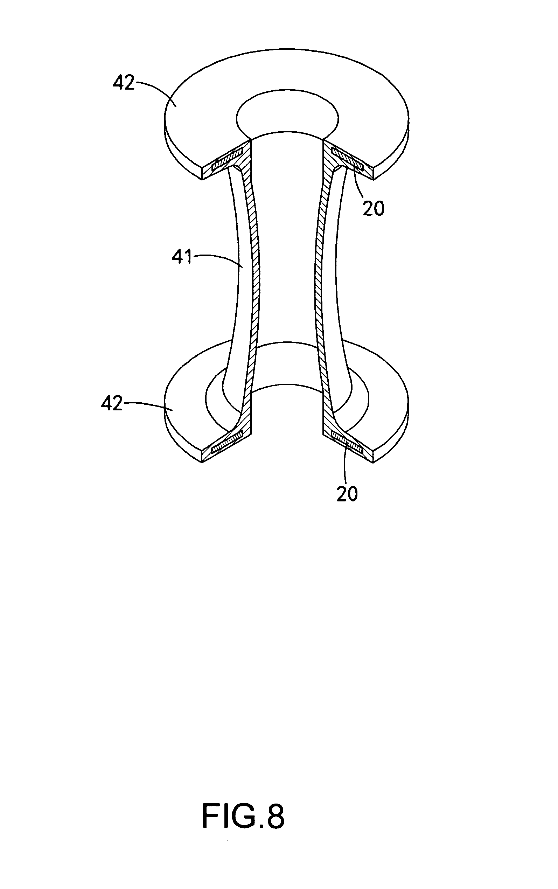

In a mold opening step, after cooling, the molds are opened and a molded wheel hub semi-facture is taken out. The wheel hub semi-facture has a tube portion 41 and two ear portions 42, which are disposed on two ends of the tube portion 41 and have the larger outer diameters. The tube portion 41 is pressed by the two inner rods 34 and 35 of the upper and lower molds 32 and 33 to form a camber having a gradually reducing tube diameter from two ends of the tube portion 41 to a middle of the tube portion 41. The two reinforcing sheets 20 are covered in the two ear portions 42, respectively, as shown in FIG. 8.

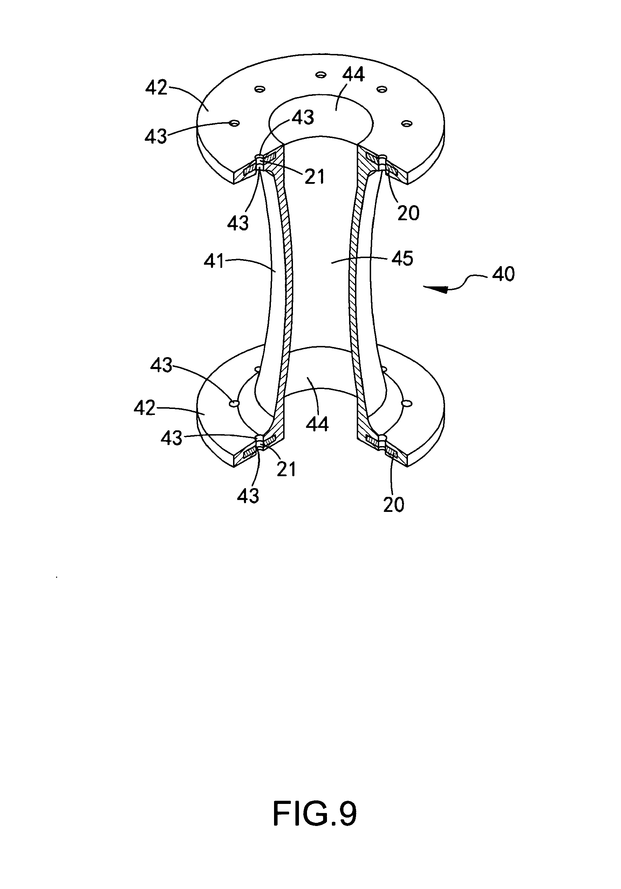

In a drilling step, multiple spoke holes 43 arranged separately and in a ring shape are drilled on the two ear portions 42, and pass through the internal reinforcing sheets 20, as shown in FIG. 9.

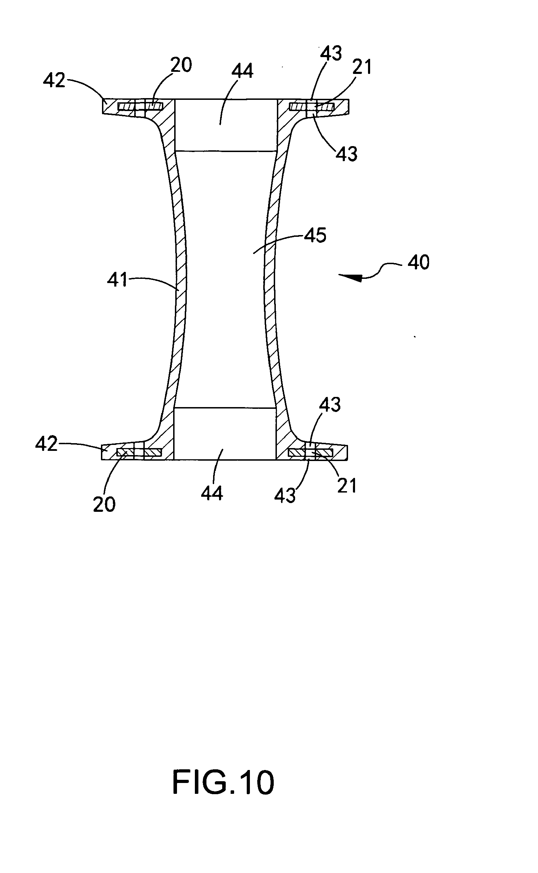

As shown in FIGS. 9 and 10, the structure of the bicycle wheel hub of the invention includes a carbon fiber body 40 and two reinforcing sheets 20.

The carbon fiber body 40 may be manufactured according to the above-mentioned method by mold-pressing and thermoforming a plurality of carbon fiber sleeves 10 and an adhesive sufficiently dipping and penetrating into gaps of the plurality of carbon fiber sleeves 10. The carbon fiber body 40 includes a tube portion 41 and two ear portions 42, which are integrally extended from two ends of the tube portion 41 and have the larger outer diameters. An outer wall surface of the tube portion 41 is a concave camber gradually recessing from two ends of the tube portion 41 to the middle of the tube portion. Two end portions of the inner hole of the tube portion 41 are formed with two opening sections 44 with the same inner diameters, respectively, so that the tube portion 41 has thicker tube walls corresponding to the opening sections 44. The inner hole has a middle section 45 between the two opening sections 44 and in correspondence with the shape of the outer wall surface, so that the tube portion 41 has a tube wall, which has the uniform thickness and corresponds to the middle section 45. The two ear portions 42 are respectively formed with a plurality of spoke holes 43 arranged separately and in a ring-shaped manner.

The two reinforcing sheets 20 are ring-shaped sheets and covered in the two ear portions 42, respectively, when the carbon fiber body 40 is formed. The two reinforcing sheets 20 have through holes 21, which have the same shape and correspond to the spoke holes 43.

In this invention, the manufacturing method is used to stack and telescope the carbon fiber sleeves 10, to place the stacked and telescoped carbon fiber sleeves 10 into the molds and to inject the adhesive. Thus, the manufacturing processes of the wheel hub can be significantly simplified, the production efficiency can be enhanced and the cost can be decreased. The wheel hub is formed by stacking the carbon fiber sleeves 10 so that the adhesive sufficiently dips and penetrates into gaps of the stacked carbon fiber sleeves 10, a lot of gaps and bubbles cannot be produced, and the structural strength is also higher. More particularly, the unity of the carbon fiber sleeve 10 and the properties that the carbon fiber sleeve 10 can be easily expanded and deformed and can be easily telescoped with each other further make the manufactured wheel hub have the good stability. In addition, the mutual telescoping of the carbon fiber sleeve 10 does not need the professional technology, and the ordinary worker can complete the mutual telescoping. In addition, the carbon fiber sleeve 10 formed by weaving the carbon fiber yarns can further increase the structural strength of the molded wheel hub. Also, the two reinforcing sheets 20 may also provide the good supporting force and structural strength for the combined spokes.

In view of this, the invention has the above-mentioned advantages and utility values. In addition, no product, which is the same or similar to the invention, is found in public in this technological field, and the invention has the enhanced effect and satisfies the novelty and inventive step.

New characteristics and advantages of the invention covered by this document have been set forth in the foregoing description. It is to be expressly understood, however, that the drawings are for the purpose of illustration only and are not intended as a definition of the limits of the invention. Changes in methods, shapes, structures or devices may be made in details without exceeding the scope of the invention by those who are skilled in the art. The scope of the invention is, of course, defined in the language in which the appended claims are expressed.

## Claims

1. A manufacturing method of a bicycle wheel hub, comprising:
a pre-weaving step of weaving a plurality of carbon fiber yarns into a carbon fiber sleeve having two open ends, so that an aperture of the carbon fiber sleeve can be expanded and deformed according to requirements;
a step of stacking and telescoping a plurality of the carbon fiber sleeves;
a step of placing the stacked carbon fiber sleeves into a left mold and a right mold clamped together;
a step of placing two ring-shaped reinforcing sheets from two openings of the stacked carbon fiber sleeves into the left and right molds, respectively, and folding two ends of the stacked carbon fiber sleeves back to inner sides of the two reinforcing sheets, respectively;
a step of clamping an upper mold and a lower mold onto the left and right molds so that inner rods of the upper and lower molds extend into an inner side of the stacked carbon fiber sleeves and the stacked carbon fiber sleeves in a mold cavity are pressed into a predetermined shape;
a step of vacuuming the mold cavity;
a step of pressuring and injecting an adhesive into the mold cavity so that the adhesive sufficiently dips and penetrates into gaps of the stacked carbon fiber sleeves;
a thermoforming step of heating the molds so that the stacked carbon fiber sleeves in the mold cavity and the adhesive are sufficiently combined together;
a mold opening step of cooling the molds, opening the molds and taking out a wheel hub semi-facture having a tube portion and ear portions, which are integrally extended from two ends of the tube portion and have larger outer diameters, wherein the two reinforcing sheets are covered in the two ear portions, respectively; and
a drilling step of drilling a plurality of spoke holes on the two ear portions so that the spoke holes pass through the internal reinforcing sheets.

2. The method according to claim 1, wherein each of the carbon fiber yarns is formed by gathering a plurality of thin carbon fiber yarns.

3. The method according to claim 1, wherein outer diameters of end portions of inner rods of the upper and lower molds are smaller than those of roots of the upper and lower molds, and circumferential surfaces of the upper and lower molds are circular arc surfaces so that a tube portion of the wheel hub formed in the mold cavity forms a camber with a gradually reducing tube diameter from the two ends of the tube portion to a middle of the tube portion.

4. The method according to claim 1, wherein the carbon fiber sleeves formed in the pre-weaving step have the same aperture.

5. The method according to claim 1, wherein the carbon fiber sleeves formed in the pre-weaving step have different apertures.

6. A structure of a bicycle wheel hub, comprising:
a carbon fiber body formed by molding a plurality of carbon fiber sleeves and an adhesive sufficiently dipping and penetrating into gaps of the plurality of carbon fiber sleeves, wherein the carbon fiber body comprises a tube portion and two ear portions, which are integrally extended from two ends of the tube portion and have larger outer diameters, and the ear portions have a plurality of spoke holes arranged separately and in a ring shape; and
two reinforcing sheets, which are ring-shaped sheets and covered in the two ear portions, respectively, when the carbon fiber body is formed, wherein the two reinforcing sheets have through holes, which correspond to the spoke holes and have the same shape.

7. The structure according to claim 6, wherein an outer wall surface of the tube portion of the carbon fiber body is a concave camber gradually recessing from the two ends of the tube portion to a middle of the tube portion.

8. The structure according to claim 7, wherein two end portions of an inner hole of the tube portion are formed with opening sections having the same inner diameter, respectively, so that the tube portion has thicker tube walls corresponding to the opening sections, and the inner hole has a middle section between the two opening sections and in correspondence with a shape of the outer wall surface so that the tube portion has a tube wall, which has a uniform thickness and corresponds to the middle section.

9. The structure according to claim 8, wherein each of the carbon fiber sleeves is formed by weaving a plurality of carbon fiber yarns into the sleeve having two open ends, so that an aperture of the carbon fiber sleeve may be expanded and deformed according to requirements, wherein each of the carbon fiber yarns is formed by gathering a plurality of thin carbon fiber yarns.

10. The structure according to claim 8, wherein each of the reinforcing sheets is a metal sheet with a high hardness.
